# EUROPÄISCHE PATENTANMELDUNG

(11) **EP 2 853 305 A1**
(43) Veröffentlichungstag der Anmeldung: **01.04.2015**
(21) Anmeldenummer: 14182430.0
(22) Anmeldetag: 27.08.2014
(51) Int. Cl.: B01D 46/00, B01D 46/24, B01D 46/52

(54) **Filterelement und Filtersystem mit einem Filterelement**

(30) Priorität: 02.09.2013 DE 102013014507
(71) Anmelder: MANN + HUMMEL GMBH, 71638 Ludwigsburg (DE)
(72) Erfinder: Kaufmann, Michael, 67149 Meckenheim (DE); Ruhland, Klaus-Dieter, 67149 Meckenheim (DE)

(57) **Zusammenfassung**

Die Erfindung betrifft ein Filterelement (10), umfassend einen Filterkörper (12) mit einer Längsachse (L), eine erste an einer Stirnseite (15) angeordnete offene oder geschlossene Endscheibe (16) und eine zweite an der gegenüberliegenden Stirnseite (17) angeordnete Endscheibe (18), wobei die zweite Endscheibe (18) eine Abdichtstruktur (24) aufweist, wodurch beim Einbau des Filterelements (10) in ein Gehäuse ein Bereich (119) zwischen der zweiten Endscheibe (18) und einem Deckel (110) des Gehäuses (108) zu einem Innenbereich (118) des Gehäuses (108) abdichtbar ist.

Die Erfindung betrifft ferner ein Filtersystem (100) zum auswechselbaren Einbau eines solchen Filterelements (10).

## Beschreibung

### Technisches Gebiet

Die Erfindung betrifft ein Filterelement, insbesondere zur Verwendung als Luftfilter einer Brennkraftmaschine, sowie ein Filtersystem zum Einbau eines solchen Filterelements.

### Stand der Technik

Aus der DE 29780439 U1 sind Luftfilterkonstruktionen bekannt, bei denen das Filterelement und das Gehäuse so konstruiert sind, dass ein "Vorreinigungs"-Vorgang stattfindet, der bereits gröberen Schmutz aus der Luft entfernt, bevor diese mit dem Filterelement in Kontakt kommt. Zum Beispiel sind Gehäuse für einen dort hineingelenkten Luftstrom konstruiert, der zuerst in einer Kreisströmung oder einem schraubenförmigen Muster um das Filterelement herum (oder dieses umschreibend) gelenkt wird, so dass gröbere Schmutzpartikel oder Schwebstoffteilchen auf Grund eines Zykloneffektes bereits abgeschieden werden.

In konventionellen Systemen ist mit dem Luftstrom an der Eintrittsöffnung in das System ein erhebliches Maß an Turbulenz verbunden. Solche Turbulenz kann die Effizienz einer Vorabscheidung entscheidend negativ beeinflussen. In einigen Systemen umfasst das Gehäuse deshalb eine Innenstruktur, um dieses zu verhindern. Dieses kann vorzeitiges Zusetzen des Filtermediums mit größeren Schwebstoffteilchen bewirken. Außerdem können die Schwebstoffteilchen, wenn sie mit großer Geschwindigkeit an das Filtermedium geführt werden, das Filtermedium beschädigen.

In der DE 29780439 U1 ist außerdem eine gesamte Filteranordnung vorgesehen, die ein Gehäuse, ein herausnehmbares und ersetzbares Filterelement, im Wesentlichen wie oben beschrieben, und eine Vorreinigungsanordnung umfasst, die so aufgebaut und angeordnet ist, dass Luft tangential geführt wird, wenn sie in das Gehäuse eintritt; d.h., in einem kreisförmigen oder schraubenförmigen Strömungsmuster, das das Filterelement umschreibt oder zumindest zu Beginn im Wesentlichen um das Filterelement herum geführt wird.

### Offenbarung der Erfindung

Eine Aufgabe der Erfindung ist es, ein Filterelement mit einem verbesserten Strömungsverhalten zu schaffen, das eine effektive Vorabscheidung von gröberen Schmutzpartikeln ermöglicht.

Eine weitere Aufgabe der Erfindung ist es, ein Filtersystem zur Aufnahme eines solchen austauschbaren Filterelements mit einem verbesserten Strömungsverhalten zu schaffen, das eine effektive Vorabscheidung von gröberen Schmutzpartikeln ermöglicht.

Die vorgenannten Aufgaben werden nach einem Aspekt der Erfindung gelöst bei einem Filterelement, bei dem eine zweite Endscheibe eine Abdichtstruktur aufweist, wodurch beim Einbau des Filterelements in ein Gehäuse ein Bereich zwischen der zweiten Endscheibe und einem Deckel des Gehäuses zu einem Innenbereich des Gehäuses abdichtbar ist.

Günstige Ausgestaltungen und Vorteile der Erfindung ergeben sich aus den weiteren Ansprüchen, der Beschreibung und der Zeichnung.

Es wird ein Filterelement vorgeschlagen, das einen Filterkörper mit einer Längsachse, eine erste an einer Stirnseite angeordnete offene oder geschlossene Endscheibe und eine zweite an der gegenüberliegenden Stirnseite angeordnete Endscheibe umfasst. Dabei weist die zweite Endscheibe eine Abdichtstruktur auf, wodurch beim Einbau des Filterelements in ein Gehäuse ein Bereich zwischen der zweiten Endscheibe und einem Deckel des Gehäuses zu einem Innenbereich des Gehäuses abdichtbar ist. Bevorzugt ist die erste Endscheibe offen, d.h. mit einer zentralen Öffnung für die Ableitung von gefiltertem Fluid, und die zweite Endscheibe geschlossen ausgeführt. Die Erfindung ist jedoch auch bei einer Konstruktion mit zwei offenen Endscheiben oder mit einer einzelnen oder zusätzlichen Abdichtstruktur an einer ersten, offenen Endscheibe denkbar.

Das Filterelement, dessen Filterkörper bestimmungsgemäß für das zu filternde Medium durchlässig gestaltet ist und der an beiden Enden durch Endscheiben abgeschlossen wird, von denen eine Endscheibe üblicherweise für das zu filternde Medium undurchlässig ist, wird vorteilhafterweise so in einem Filtersystem angeordnet, dass das zu filternde Medium, also beispielsweise staubbeladene Luft, über einen Einlass in das Gehäuse strömt und tangential am Filterelement vorbei geleitet wird. Durch die tangentiale Anströmung des Filterelements wird die Strömung in eine um das Filterelement rotierende Bewegung, eine sogenannte Zyklonbewegung, gebracht. In dieser Zyklonvorabscheidung wirken durch die Rotation der Strömung Fliehkräfte auf mögliche gröbere Staub- und Schmutzpartikel in der Luft, die dadurch zum großen Teil vorabgeschieden werden können. Im Stand der Technik kann der Bereich zwischen geschlossener Endscheibe des Filterelementes und Deckel des Gehäuses von dem zu filternden Medium durchströmt werden, wodurch zum einen Turbulenzen im Innenbereich des Gehäuses verursacht werden können, die die Effektivität des Zykloneffektes vermindern können, zum anderen ein Teil des Grobschmutzes sich im Bereich der Endscheibe ablagern kann. Erfindungsgemäß weist die Endscheibe deshalb eine Abdichtstruktur auf, die beim Einbau des Filterelementes in das Gehäuse den Bereich zwischen der Endscheibe und dem Deckel des Gehäuses vom restlichen Innenbereich des Gehäuses abdichtet. Die Abdichtstruktur kann dabei beispielsweise als elastischer Ring ausgeführt sein, der direkt unterhalb oder auf Höhe der Endscheibe auf dem Außenumfang des Filterkörpers aufliegt. Wird der Deckel des Gehäuses über das Filterelement auf das Gehäuse aufgesetzt, gleitet eine geeignet ausgeführte Innenkontur des Deckels, beispielsweise in Form eines innen liegenden Deckelbundes, über die Abdichtstruktur und dichtet so den Raum über der Abdichtstruktur, also im Bereich der Endscheibe, gegen den übrigen Innenraum des Filtersystems ab. Diese Abdichtstruktur in Form eines Rings kann über einzelne Stege mit der Endscheibe verbunden sein, um so beim Aufsetzen des Deckels auch bei einer engen Toleranzlage dafür zu sorgen, dass die Abdichtstruktur nicht nach unten geschoben werden kann und so die Abdichtwirkung verletzt wäre. Um eine sichere Abdichtwirkung der Abdichtstruktur zu erreichen, ist es zweckmäßig, wenn der Außendurchmesser der Abdichtstruktur größer ausgeführt ist, als der Innendurchmesser des innen liegenden Deckelbundes, wobei eine Überdeckung je nach gewähltem Werkstoff von einigen Zehntel Millimetern ausreichend ist. Die Abdichtstruktur wird sich dann beispielsweise in Form einer Dichtlippe eng an die Kontur des innen liegenden Deckelbundes anlegen. Dadurch kann der Bereich zwischen Endscheibe und Deckel nicht mehr umströmt werden und die Turbulenzen des zu filternden Mediums werden reduziert. Günstigerweise wird dadurch der Vorabscheidegrad des Filtersystems deutlich gesteigert, da die Strömung besser der gewünschten Zyklonbewegung folgen kann und sich die gröberen Schmutzpartikel an der Außenwand des Gehäuses abscheiden und über einen Schmutzauslass abgelassen werden können. Da der Bereich zwischen Endscheibe und Deckel außerhalb des Strömungsweges liegt, tragen dort auftretende Verwirbelungen und Ablenkungen der im Gehäuse rotierenden Luftströmung nur unnötig zum Druckverlust des Filtersystems bei. Die Bewegungsenergie der rotierenden Strömung kann dort nicht effizient zur Abscheidung von Verunreinigungen genutzt werden.

Es kann insbesondere ausreichend sein, wenn die Dichtwirkung der Abdichtstruktur staubdicht ist, um die genannten Wirkungen und Vorteile zu erzielen. Eine vollständig strömungsdichte oder wasserdichte Abdichtung ist daher vorteilhaft, jedoch technisch nicht zwingend erforderlich.

Vorteilhafterweise kann die Abdichtstruktur ringförmig einen Umfang der zweiten Endscheibe umschließen. Beispielsweise kann die Abdichtstruktur in der Form eines O-Rings die Endscheibe umschließen, der auf dem radial äußeren Umfang der Endscheibe aufliegt. Dadurch kann eine sehr zuverlässige und gleichmäßige Abdichtung des Bereichs zwischen der Endscheibe und dem Deckel des Gehäuses erfolgen. Durch die Dicke des O-Rings kann die Passung des Filterelementes zum Innendurchmesser des Deckels geeignet eingestellt werden, um eine leichte Montage des Deckels über das Gehäuse und/oder des Filterelements und auf der anderen Seite eine zuverlässige Abdichtung zu erreichen.

Ferner kann die Abdichtstruktur segmentartig regelmäßig oder unregelmäßig unterbrochen sein. Eine solche Anordnung kann sich als vorteilhaft erweisen, wenn die Montage des Deckels zu schwergängig erfolgt. Durch eine derartig unterbrochene Abdichtstruktur lässt sich eine leichtere Montage erreichen und die Unterdrückung einer Umströmung des Bereichs zwischen Endscheibe und Deckel mit dem zu filternden Medium kann dennoch ähnlich wirksam wie in der durchgehenden Anordnung erfolgen.

In einer vorteilhaften Ausführungsform weist die Abdichtstruktur eine radial nach außen gerichtete Dichtfläche auf, insbesondere zur Abdichtung an einer Zarge oder einem in Richtung des Gehäuseinnenraums eingezogenen Wandabschnitts des Deckels. Dies hat den Vorteil, dass an der Abdichtstruktur im Betrieb keine dauerhafte axiale, durch Verspannung des Filterelements im Gehäuse aufzubauende Kraft erforderlich ist, die die axiale Belastung des Filterelements zusätzlich erhöhen würde.

In einer weiteren vorteilhaften Ausführungsform wird die Abdichtstruktur durch eine ringförmig um den radialen Außenumfang der Endscheibe umlaufende Dichtlippe gebildet. Die Dichtlippe erstreckt sich bevorzugt radial über den Umfang des Filterkörpers und/ oder die radiale Außenfläche der Endscheibe hinaus.

Vorteilhafterweise kann die Abdichtstruktur an die zweite Endscheibe angespritzt sein. Dies erleichtert die Montage des Filterelementes, da die Abdichtstruktur auf diese Weise bei der Lagerung nicht verloren gehen oder bei der Montage verschoben werden kann. Auch ist auf jeden Fall die zu dem Filterelement passende Abdichtstruktur bei der Montage vorhanden und kann nicht vertauscht werden. Dadurch, dass die Abdichtstruktur nachträglich angespritzt werden kann, kann auch das Material mit einer passenden Elastizität für die Abdichtwirkung gewählt werden und ist nicht auf das Material der Endscheibe festgelegt.

In einer weiteren vorteilhaften Ausgestaltung andererseits kann die Abdichtstruktur auch mit der zweiten Endscheibe einstückig ausgeführt sein. Sollte das Material der Endscheibe eine für die Abdichtwirkung geeignete Elastizität aufweisen, kann die Abdichtstruktur auch mit der Endscheibe in einem Arbeitsgang an den Filterkörper angespritzt werden und so einstückig mit der Endscheibe ausgeführt werden. Dies stellt eine sehr kostengünstige Art dar, eine zusätzliche Abdichtstruktur umzusetzen. Auch dafür gelten die oben genannten Vorteile, dass die Abdichtstruktur nicht verloren gehen und auch nicht vertauscht werden kann.

Bevorzugt ist die erste und/oder die zweite Endscheibe aus einer in Gießschalen verarbeitbare Vergussmasse, wie beispielsweise Polyurethan oder bevorzugt Polyurethanschaum, gebildet. Der Filterkörper kann dabei beim Gießvorgang in das Endscheibenmaterial eingebettet werden. Dabei kann die äußere Form der Abdichtstruktur auf einfache Weise durch die Gießschale im radial äußeren Bereich der zu bildenden Endscheibe vorgegeben werden.

In einer günstigen Ausgestaltung kann der Filterkörper beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper, oder Rotationsfaltung hergestellt werden. Der Filterbalg kann beispielsweise aus Papier oder aus Zellulose oder aus einer Mischfaser aus Kunststoff und Zellulose bestehen. Der Filterbalg kann ferner mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper kann weiterhin mit einem Fadenwickel strukturell versteift sein. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, so dass eine selbsttragende Bauweise des Filterkörpers und damit eine günstige Montageeigenschaft gegeben sind.

Zweckmäßigerweise kann das Filterelement als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filterelements als Partikelfilter, insbesondere als Partikelfilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filtersystem mit einem erfindungsgemäßen Filterelement, umfassend ein Gehäuse, welches im Wesentlichen konzentrisch um eine Längsachse aufgebaut ist, einen das Gehäuse verschließenden Deckel, der ebenfalls konzentrisch um die Längsachse aufgebaut ist, einen am Gehäuse und/oder Deckel angeordneten Einlass zum Zuführen des zu filternden Mediums, insbesondere Luft, wobei am Gehäuse konzentrisch zur Längsachse ein Auslass zur Ableitung des gefilterten Mediums vorgesehen ist, eine Zarge oder einen in Richtung des Gehäuseinnenraums eingezogenen Wandabschnitts am Deckel oder am Gehäuse, an welcher die Abdichtstruktur des Filterelements so anliegt, dass der axial zwischen Endscheibe und Deckel oder Gehäuse gebildete Volumenbereich vom durchströmten Bereich des Gehäuses, der den Filterkörper ringförmig umgibt, getrennt ist.

Dabei kann am Gehäuse im Bereich des Auslasses eine Dichtungskontur vorgesehen sein, die mit einer radialen Dichtung der ersten Endscheibe des Filterelements korrespondiert, wobei das Filterelement auswechselbar in dem Gehäuse des Filtersystems angeordnet ist. Der wesentliche Vorteil eines solchen Filtersystems liegt dabei in der sicheren und stabilen Montage des Filterelements sowie einer sehr wirtschaftlichen Austauschbarkeit des Filterelements im Servicefall. Gerade bei niedrigen Standzeiten, wie sie im Land- und Baumaschineneinsatz auftreten können, ist die schnelle Austauschbarkeit von großer Bedeutung.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider umfasst eine Leitgeometrie, die das zu filternde Medium in eine Rotation versetzt. Bevorzugt ist ein Einlass tangential in den Innenraum des Gehäuses gerichtet, bevorzugt am auslassseitigen Ende des Gehäuses, so dass die Strömung in eine Rotationsbewegung um das Filterelement herum gezwungen wird. Durch diese Rotation wird der Schmutz im Bereich der Gehäusewand aufkonzentriert und an einer geeigneten Stelle, beispielsweise am Gehäusedeckel am dem Auslassende gegenüberliegenden Ende des Gehäuses, über einen Schmutzauslass ausgetragen. Durch die Vorabscheidung des größten Teils an Schmutz aus der zu filternden Luft kann die Standzeit des eigentlichen Filterelements entscheidend verlängert werden.

Die Abdichtstruktur dichtet bevorzugt radial gegen eine so genannte Zarge ab. Als Zarge wird eine zylindrische, rohrförmige Wand definiert, die sich axial vom Deckel des Gehäuses (oder auch vom anderen Gehäuseteil im Bereich des Auslasses) über einen Teil der Länge des Filterelementes (beispielsweise zwischen 20 und 40 Prozent der Länge des Filterelements) in den Gehäuseinnenraum erstreckt und dabei das Filterelement bevorzugt koaxial umgibt. Zwischen der Zarge und der Außenwandung des Gehäuses bzw. des Deckels ist somit ein ringförmiger Strömungsbereich gebildet, in welchem das Fluid frei rotieren kann. Die Zarge umgibt das Filterelement in geringem Abstand, bevorzugt kleiner als 10 mm, besonders bevorzugt kleiner als 5 mm. Die Abdichtstruktur liegt bevorzugt radial an der Zarge insbesondere dichtend an. Es hat sich überraschend herausgestellt, dass die damit erreichte Abdichtung des zwischen Endscheibe und Deckel liegenden Bereichs und somit Trennung des Bereichs vom durchströmten Bereich des Gehäuses eine Verbesserung der Zyklon-Vorabscheideleistung erwirkt.

Im Vergleich zu einem Filtersystem ohne eine sich entlang des Filterkörpers erstreckende Zarge, in welchem ebenfalls in einem zwischen Endscheibe und Deckel liegenden Bereich noch eine Rotation der Strömung stattfindet, ist ebenfalls eine positive Wirkung durch die erfindungsgemäße Abdichtung vorhanden, wenn sich die Zarge oder ein in Richtung des Gehäuseinnenraums eingezogenen Wandabschnitts des Deckels oder des anderen Gehäuseteils bis zur Endscheibe des Filterelements erstreckt, so dass die Abdichtstruktur an der Zarge anliegt.

Gemäß einer weiteren Ausgestaltung der Erfindung kann ein Sekundärelement im Inneren des Filterelements angeordnet sein. Das Sekundärelement, das aus einer tragenden Struktur in zylinderförmiger Ausgestaltung bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement, das konzentrisch zur Längsachse des Filtersystems im Inneren des Filterelements angeordnet sein kann, ist beispielsweise über eine Schraubverbindung mit dem Gehäuse verbunden und zum Gehäuse mit einer Dichtung versehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: einen Längsschnitt durch ein Filtersystem nach einem Ausführungsbeispiel der Erfindung;
- Fig. 3: ein Filterelement mit einer an der zweiten Endscheibe angespritzten Abdichtstruktur nach einem Ausführungsbeispiel der Erfindung;
- Fig. 4: einen Schnitt durch den deckelseitigen Teil eines Filtersystems nach einem Ausführungsbeispiel der Erfindung, das eine an der zweiten Endscheibe angespritzte Abdichtstruktur zeigt;

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

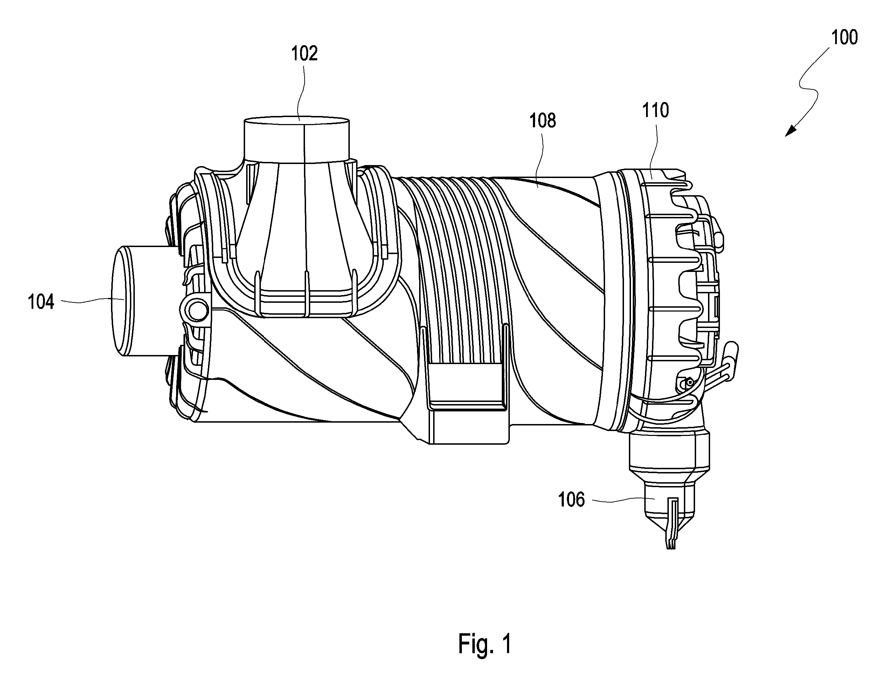

Figur 1 zeigt eine perspektivische Ansicht eines Filtersystems 100 nach einem Ausführungsbeispiel der Erfindung, das beispielsweise als Luftfilter einer Brennkraftmaschine eingesetzt sein kann, mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, so dass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, so dass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

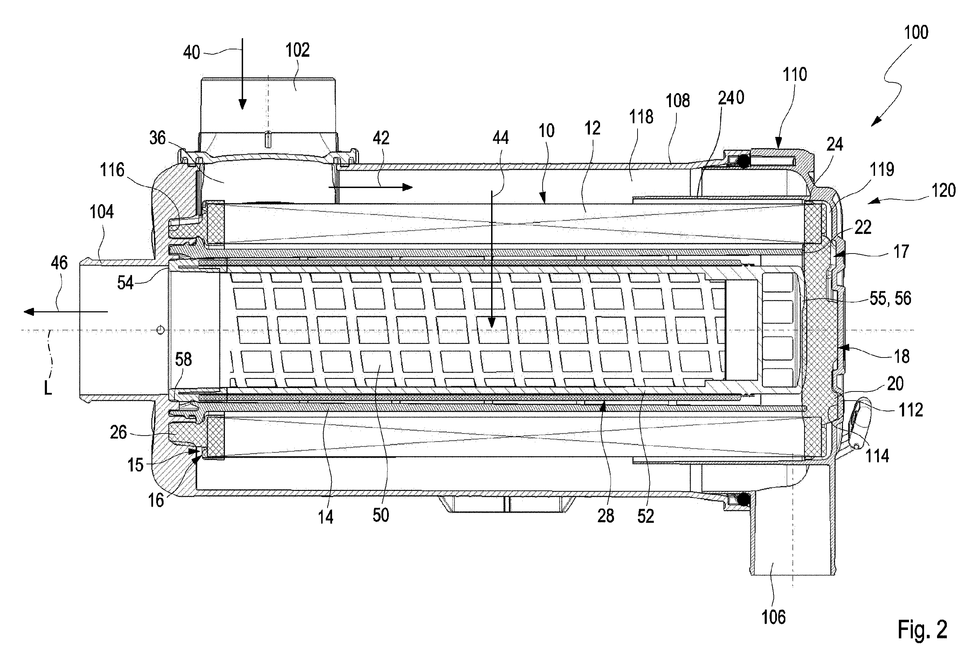

In Figur 2 ist ein Längsschnitt durch ein Filtersystem 100 nach einem Ausführungsbeispiel der Erfindung mit tangentialem Einlass 102, zentrischem Auslass 104 und bodenseitigem Schmutzauslass 106 dargestellt. Das Gehäuse 108 des Filtersystems 100 ist an seiner Stirnseite 120 mit einem Deckel 110 verschlossen. Ein Filterelement 10, das im Wesentlichen aus einem um die Längsachse L konzentrischen Filterkörper 12 besteht, ist an zwei gegenüberliegenden Stirnseiten 15, 17 mit einer ersten offenen Endscheibe 16 und einer zweiten Endscheibe 18, die beispielsweise aus Polyurethanschaum oder einem Elastomer ausgeführt sein können, abgeschlossen. Der Filterkörper 12 kann beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper 12, oder Rotationsfaltung hergestellt werden. Der Filterbalg kann beispielsweise aus Papier, Zellulose oder einer Mischfaser aus Kunststoff und Zellulose bestehen und mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper 12 kann weiterhin mit einem Fadenwickel strukturell versteift sein.

Die zweite Endscheibe 18 weist Abstütznoppen 20 auf, welche sich von der axialen Außenfläche der zweiten Endscheibe axial nach außen erstrecken und kreisförmig bevorzugt regelmäßig beabstandet um die Längsachse L angeordnet sind und bei einem Einbau in das aufnehmende Gehäuse 108 an einer Innenfläche, beispielsweise an einer inneren Deckelkontur 114 des Deckels 110 anliegend sich an dem Deckel 110 axial abstützen. Im Inneren 50 des Filterelements 10 ist ein gehäusefestes Stützrohr 14 um die Längsachse L konzentrisch angeordnet und an dem auslassseitigen Ende des Stützrohrs 14 fest mit dem Gehäuse 108 verbunden. Die dem Stützrohr 14 zugewandte Fläche der zweiten Endscheibe 18 liegt auf dem offenen, der Endscheibe 18 zugewandten, Ende des Stützrohrs 14 auf. Wenn beim Schließen des Deckels 110 die innere Deckelkontur 114 des Deckels 110 auf die Endscheibe 18 drückt, wird diese Kraft durch die Endscheibe 18 über die Abstütznoppen 20 auf die Endscheibe 18 durchgeleitet, die sich weiter auf dem Stützrohr 14 abstützen kann. Auf diese Weise ist das Filterelement 10 über die zweite Endscheibe 18 axial gegen den Deckel 110 und damit gegen das Gehäuse 108 verspannt und erfährt dadurch eine Festlagerung an der Stirnseite 17, dem deckelseitigen Ende des Filterelements 10. Da die Abstütznoppen 20 die Endscheibe 18 vom Deckel 110 beabstanden, entsteht zwischen Deckel 110 und Endscheibe 18 ein offener, nicht von Material gefüllter Bereich 119, auch Totvolumen genannt.

Weiter sind in der inneren Deckelkontur 114 rippenförmige Erhebungen 112 angebracht, mit denen sich der elastische Werkstoff der zweiten Endscheibe 18 verzahnen oder verkrallen kann, so dass das Filterelement 10 dadurch gegen mögliche Verdrehungen bei Vibrationen im Betrieb gesichert ist. Weiter sind auch an dem der Endscheibe 18 zugewandten Ende des Stützrohrs 14 Aussparungen 22 denkbar, welche eine weitere Verzahnung oder Verkrallung des Stützrohrs 14 mit der Endscheibe 18 ermöglichen, um so eine weitere Verdrehsicherung des Filterelements 10 durch Vibrationen zu gewährleisten.

An der gegenüberliegenden Stirnseite 15 des Filterelements 10 ist an der ersten Endscheibe 16 eine Radialdichtung 26 angebracht, die mit einer Dichtungskontur 116 des Gehäuses 108 korrespondiert, d.h. an dieser dichtend anliegt und mit deren Hilfe das Filterelement 10 den ungefilterten gegen den gefilterten Luftraum abdichtet.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Diese Vorabscheidung findet in einem Innenbereich 118 des Gehäuses, bevorzugt an der Innenwand des Gehäuses 108, statt, in dem die staubbeladene Luft frei strömen kann. Zwischen der zweiten Endscheibe 18 und dem Deckel 110 des Gehäuses 108 ist ein Bereich 119, auch als Totvolumen bezeichenbar, angeordnet, der durch eine mit der zweiten Endscheibe 18 einstückig und materialeinheitlich ausgebildeten Abdichtstruktur 24 abgedichtet ist, so dass in dem Bereich 119 keine Umströmung stattfinden kann. Diese Abdichtstruktur 24 kann beispielsweise ringförmig am Umfang der Endscheibe 18 angebracht sein. Andererseits ist es für eine Unterbindung der Umströmung in dem Bereich 119 nicht unbedingt nötig, dass die Abdichtstruktur 24 über den Umfang der Endscheibe 18 durchgehend zu dem Gehäuse 108 und/oder Deckel 110 abdichtet. Die Abdichtstruktur 24 kann auch segmentartig unterbrochen sein, um die Umströmung zu unterbinden. Die Abdichtstruktur dichtet, wie in Fig. 2 gezeigt, bevorzugt radial gegen eine so genannte Zarge 240 ab. Die Zarge 240 ist eine zylindrische, rohrförmige Wand, die sich axial vom Deckel 110 des Gehäuses 108 (oder auch vom anderen Gehäuseteil 108 im Bereich des Auslasses 104) über einen Teil der Länge des Filterelementes 10 (beispielsweise zwischen 20 und 40 Prozent der Länge des Filterelements 10) in den Gehäuseinnenraum erstreckt und dabei das Filterelement 10 bevorzugt koaxial umgibt. Zwischen der Zarge 240 und der Außenwandung des Gehäuses 108 bzw. des Deckels 110 ist somit ein ringförmiger Strömungsbereich gebildet, in welchem das Fluid frei rotieren kann. Die Zarge 240 umgibt das Filterelement 10 in geringem Abstand, bevorzugt kleiner als 10 mm, besonders bevorzugt kleiner als 5 mm. Die Abdichtstruktur 24 liegt bevorzugt radial an der Zarge 240 insbesondere dichtend an. Es hat sich überraschend herausgestellt, dass die damit erreichte Abdichtung des zwischen Endscheibe 18 und Deckel 110 liegenden Bereichs 119 und somit Trennung des Bereichs 119 vom durchströmten Bereich des Gehäuses 108 eine Verbesserung der Zyklon-Vorabscheideleistung erwirkt.

Die Luft strömt beim Betrieb dann weiter nach Teilabscheidung der Staubpartikel durch den Filterkörper 12 in Pfeilrichtung 42, 44 ins Innere 50 des Filterelements. Staubpartikel bleiben dabei je nach Filtermedium ab einer bestimmten Größe im Filtermedium hängen. Je nach Staubeintrag muss deshalb das Filterelement 10 nach einer gewissen Standzeit ausgetauscht werden. Über den Auslass 104 strömt die gefilterte Luft in Pfeilrichtung 46 ab.

Im Inneren 50 des Filterelements 10 ist ein Sekundärelement 28 angebracht, das im Wesentlichen aus einer tragenden Struktur, dem Körper 52 mit einem relativ durchlässigen Filtermedium, beispielsweise einem Vlies, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist mit dem offenen Ende 54 in einen Gehäusesitz 58 am auslassseitigen Teil des Gehäuses 108 gesteckt. Auf dem geschlossenen Ende 55 des Sekundärelements 28 liegt die zweite Endscheibe 18 des Filterelements 10 auf, wodurch beim Schließen des Gehäusedeckels 110 eine Kraft über die Abstütznoppen 20 der Endscheibe 18 in das geschlossene Ende des Sekundärelements 28, das als Handgriff 56 ausgebildet ist, mit dem es aus dem Gehäusesitz 58 und damit dem Gehäuse 108 auch wieder entfernt werden kann, geleitet werden kann und das Sekundärelement 28 so fest in seinen Gehäusesitz 58 gepresst wird.

Derartige Filtersysteme wie in Figur 1 und 2 dargestellt, werden üblicherweise im Baumaschinen und Landmaschinenbereich eingesetzt. Sie zeichnen sich durch große Robustheit aus und weisen wegen der hohen Filterlast kurze Standzeiten auf. Ein Filtersystem mit beladenem Filterelement muss dabei einen Gewichtszuwachs von 10 kg oder mehr tolerieren.

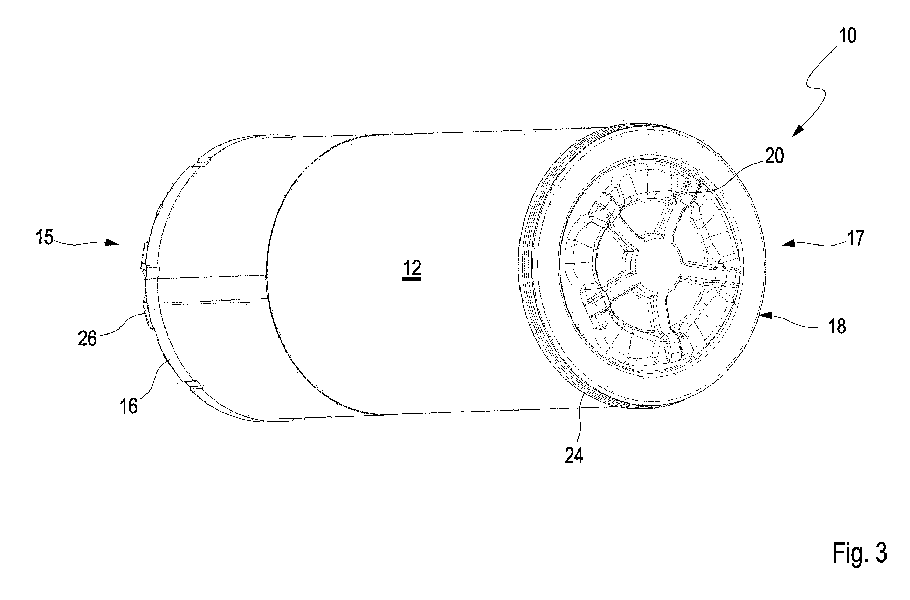

Figur 3 zeigt eine Ansicht des Filterelements 10 nach Fig. 2, mit einer an der zweiten Endscheibe 18 einstückig und materialeinheitlich ausgebildeten Abdichtstruktur 24 nach einem Ausführungsbeispiel der Erfindung. Das Filterelement 10 besteht aus einem Filterkörper 12, der an den beiden Stirnseiten 15, 17 mit den Endscheiben 16, 18 abgeschlossen ist. Die zweite Endscheibe 18 weist an der Oberseite Abstütznoppen 20 für eine axiale Verspannung und radiale Abstützung in einem Gehäuse auf, wenn das Filterelement 10 eingesetzt ist und das Gehäuse von außen mit einem Deckel verschlossen wird, an dem sich das Filterelement 10 mit den Abstütznoppen 20 der Endscheibe 18 verspannen und verzahnen kann. Die Abdichtstruktur 24 ist in Figur 3 als radialer Dichtring dargestellt, der mit der Endscheibe 18 einstückig ausgebildet ist, könnte jedoch auch in einem Spritzgussprozess an die Endscheibe 18 angespritzt werden, beispielsweise in einem Zweikomponentenspritzgussverfahren, bei welchem die Abdichtstruktur 24 als Weichkomponente um eine harte, kunststoffspritzgegossene Endscheibenstruktur 18 herum angespritzt wird. Weiter könnte die Abdichtstruktur 24 auch als unterbrochene Struktur realisiert werden, da keine vollständige Abdichtung nötig ist, um die Umströmung der Endscheibe 18 im Bereich zwischen Endscheibe 18 und Deckel 110 des Gehäuses zu unterbinden.

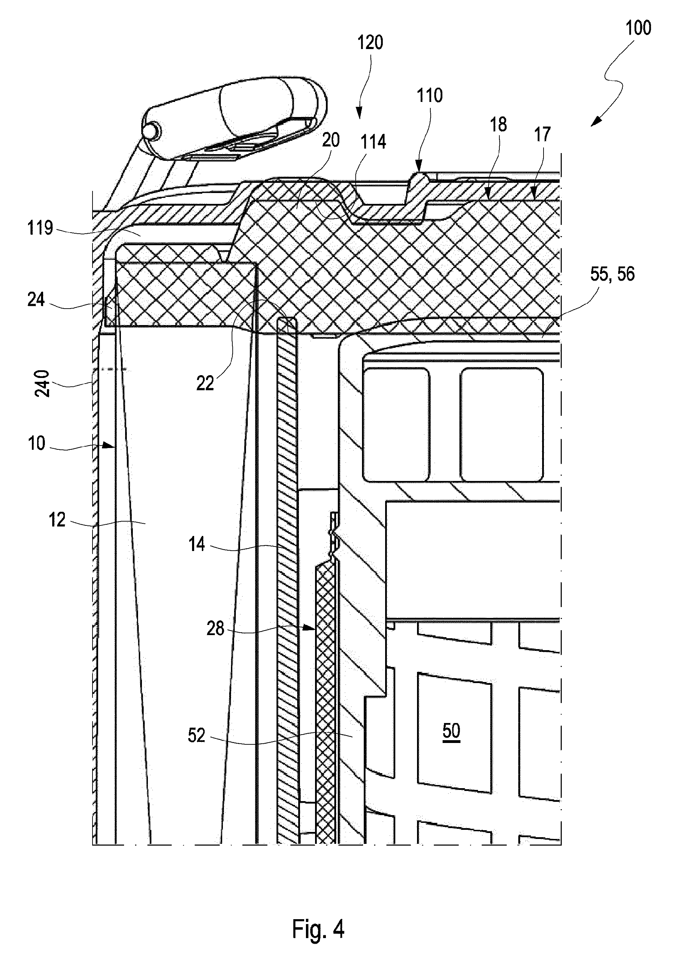

Figur 4 zeigt einen Schnitt durch den deckelseitigen Teil eines Filtersystems 100 nach einem Ausführungsbeispiel der Erfindung, insbesondere durch das in Fig. 1 gezeigte Filtersystem mit einem in Fig. 2 und 3 gezeigten Filterelement, wobei eine mit der zweiten Endscheibe einstückig und materialeinheitlich ausgebildete Abdichtstruktur 24 gezeigt ist. Es ist ein Teil des Filterelements 10, bestehend aus Filterkörper 12 und zweiter Endscheibe 18, sowie im Inneren des Filterelements 10 das gehäuseseitig montierte Stützrohr 14 und das ebenfalls in einem Gehäusesitz angebrachte Sekundärelement 28 dargestellt. Nach der Montage des Filterelements 10 im Gehäuse 108 und Schließen des Deckels 110 an der Stirnseite 120 drückt dieser auf die zweite Endscheibe 18 über die Abstütznoppen 20. Die Endscheibe 18 drückt auf der anderen Seite auf das der Endscheibe 18 zugewandte Ende des Stützrohrs 14 sowie auf das geschlossene Ende 55 des Sekundärelements 28 mit dem Handgriff 56. In der Zeichnung ist dabei eine Durchdringung der Endscheibe 18 mit dem Deckel 110, dem Stützrohr 14 und dem Sekundärelement 28 dargestellt. Da der Werkstoff der Endscheibe 18 zweckmäßigerweise Polyurethanschaum oder ein ähnlich elastischer Werkstoff ist, wird die Endscheibe 18 in der Realität zwischen Deckel 110, Stützrohr 14 und Sekundärelement 28 zusammengepresst und überträgt so die Kraft vom Deckel 110 auf das Stützrohr 14 und das Sekundärelement 28 . Auf diese Weise wird das Filterelement 10 über die Endscheibe 18 fest eingeklemmt und damit fest gelagert. Außerdem presst die Endscheibe 18 auch das Sekundärelement 28 fest in seinen Gehäusesitz.

Zwischen Endscheibe 18 und Deckel 110 ist die an der Endscheibe 18 angebrachte Abdichtstruktur 24 zu erkennen, welche die Abdichtung des Innenbereichs des Gehäuses gegen den Bereich 119 zwischen Endscheibe 18 und Deckel 110 bewirkt, um so eine Umströmung des Bereichs 119 mit dem ungefilterten Medium zu verhindern. Dadurch wird zum einen eine Verschmutzung des Bereichs 119 verhindert. Außerdem wird durch eine wesentlich homogenisierte Strömung des ungefilterten Mediums im Innenbereich des Gehäuses eine erhöhte Vorabscheidung von Schmutzpartikeln über den Zykloneffekt erreicht. Die Abdichtstruktur 24 kann dabei beispielsweise als elastischer Ring ausgeführt sein, der direkt unterhalb oder auf Höhe der Endscheibe 18 auf dem Außenumfang des Filterkörpers 12 aufliegt. Wird der Deckel 110 des Gehäuses 108 über das Filterelement 10 auf das Gehäuse 108 aufgesetzt, gleitet eine geeignet ausgeführte Innenkontur des Deckels 110, beispielsweise in Form eines innen liegenden Deckelbundes, über die Abdichtstruktur 24 und dichtet so den Raum über der Abdichtstruktur 24, also im Bereich der Endscheibe 18, gegen den übrigen Innenraum 50 des Filtersystems 100 ab. Diese Abdichtstruktur 24 in Form eines Rings kann über einzelne Stege mit der Endscheibe 18 verbunden sein, um so beim Aufsetzen des Deckels 110 auch bei einer engen Toleranzlage dafür zu sorgen, dass die Abdichtstruktur 24 nicht nach unten geschoben werden kann und so die Abdichtwirkung verletzt wäre. Im Detail der Figur 4 wird deutlich, dass die Abdichtstruktur 24 bevorzugt, wie in dieser Figur gezeigt, einstückig mit der insbesondere geschlossenen, bevorzugt aus einer Polyurethan oder Polyurethanschaum gegossenen Endscheibe 18 ausgebildet ist. Die Abdichtstruktur ist in diesem Fall durch eine ringförmig um den radialen Außenumfang der Endscheibe 18 umlaufende Dichtlippe gebildet, deren axiale Erstreckung nur einem Teil der Dicke in axialer Richtung der Endscheibe 18 beträgt. Die axiale Ausdehnung der Dichtlippe, im Folgenden als Breite bezeichnet, beträgt dabei bevorzugt weniger als 10 mm, besonders bevorzugt weniger als 5 mm. Die Dichtlippe erstreckt sich bevorzugt radial über den Umfang des Filterkörpers 12 und/oder die radiale Außenfläche der Endscheibe 18 hinaus, beispielsweise beträgt die radiale Erstreckung zwischen 1 - 10 mm.

## Patentansprüche

1. Filterelement (10), umfassend einen Filterkörper (12) mit einer Längsachse (L), eine erste an einer Stirnseite (15) angeordnete, offene Endscheibe (16) und eine zweite an der gegenüberliegenden Stirnseite (17) angeordnete, geschlossene Endscheibe (18), wobei die zweite Endscheibe (18) eine Abdichtstruktur (24) aufweist, wodurch beim Einbau des Filterelements (10) in ein Gehäuse ein Bereich (119) zwischen der zweiten Endscheibe (18) und einem Deckel (110) des Gehäuses (108) zu einem Innenbereich (118) des Gehäuses (108) abdichtbar ist.

2. Filterelement nach Anspruch 1, wobei die Abdichtstruktur (24) ringförmig den Außenumfang der zweiten Endscheibe (18) umschließt.

3. Filterelement nach einem der vorhergehenden Ansprüche, wobei die Abdichtstruktur (24) eine radial nach außen gerichtete Dichtfläche aufweist.

4. Filterelement nach Anspruch 3, wobei die Abdichtstruktur (24) durch eine ringförmig um den radialen Außenumfang der Endscheibe (18) umlaufende Dichtlippe gebildet ist.

5. Filterelement nach Anspruch 4, wobei sich die Dichtlippe radial über den Umfang des Filterkörpers (12) und/oder die radiale Außenfläche der Endscheibe (18) hinaus erstreckt.

6. Filterelement nach einem der vorhergehenden Ansprüche, wobei die Abdichtstruktur (24) segmentartig unterbrochen ist.

7. Filterelement nach einem der vorhergehenden Ansprüche, wobei die Abdichtstruktur (24) an die zweite Endscheibe (18) angespritzt oder mit dieser einstückig insbesondere aus in Gießschalen gegossenem Polyurethan oder Polyurethanschaum ausgeführt ist.

8. Filterelement nach einem der vorhergehenden Ansprüche, wobei der Filterkörper (12) zickzackförmig gefaltet, ringförmig geschlossen ausgeführt ist und vorzugsweise aus Papier oder aus Zellulose oder aus einer Mischfaser aus Kunststoff und Zellulose oder einer Zellulosefaserlage und einer Kunststofffaserlage besteht.

9. Verwendung eines Filterelements (10) nach einem der vorhergehenden Ansprüche als Luftfilter, insbesondere als Luftfilter einer Brennkraftmaschine.

10. Filtersystem (100), insbesondere Luftfiltersystem für die Ansaugluft einer Brennkraftmaschine, mit einem Filterelement (10) nach einem der vorhergehenden Ansprüche, umfassend
• ein Gehäuse (108), welches im Wesentlichen konzentrisch um eine Längsachse (L) aufgebaut ist,
• einen das Gehäuse (108) verschließenden Deckel (110), der ebenfalls konzentrisch um die Längsachse (L) aufgebaut ist,
• einen am Gehäuse (108) und/oder Deckel (110) angeordneten Einlass (102) zum Zuführen des zu filternden Mediums, insbesondere Luft,
• eine Zarge oder einen in Richtung des Gehäuseinnenraums eingezogenen Wandabschnitts am Deckel (110) oder am Gehäuse (108), an welcher die Abdichtstruktur (24) des Filterelements (10) so anliegt, dass der axial zwischen Endscheibe (18) und Deckel (110) oder Gehäuse (108) gebildete Volumenbereich (119) vom durchströmten Bereich des Gehäuses, der den Filterkörper (12) ringförmig umgibt, getrennt ist.

11. Filtersystem nach dem vorhergehenden Anspruch,
wobei am Gehäuse (108) konzentrisch zur Längsachse (L) ein Auslass (104) zur Ableitung des gefiltertem Mediums vorgesehen ist, wobei am Gehäuse (108) im Bereich des Auslasses (104) eine Dichtungskontur (116) vorgesehen ist, die mit einer radialen Dichtung (26) der ersten Endscheibe (16) des Filterelements (10) korrespondiert, wobei das Filterelement (10) auswechselbar in dem Gehäuse (108) des Filtersystems (100) angeordnet ist.

12. Verfahren zur Verbesserung der Vorabscheideleistung eines Filtersystems, insbesondere nach einem der beiden vorhergehenden Ansprüche, das Filtersystem umfassend ein zylinderförmiges Gehäuse mit einem Deckel und ein zylindrisches, ringförmig geschlossenes Filterelement mit zwei Endscheiben, insbesondere nach einem der Ansprüche 1 bis 10, bei welchem das einströmende Fluid insbesondere durch eine exzentrische, tangentiale Einströmung in einem ringförmigen Strömungsbereich zwischen Gehäusewand und Filterelement in Rotation versetzt wird und der Raum, in welchem das Fluid rotieren kann, durch eine an einer Endscheibe des Filterelements ausgebildete Abdichtstruktur, die an eine Zarge oder einem in Richtung des Gehäuseinnenraums eingezogenen Wandabschnitts am Deckel oder am Gehäuse anliegt, von einem Volumenbereich (119) getrennt wird, welcher axial zwischen der Endscheibe mit daran ausgebildeter Abdichtstruktur und dem Gehäuse oder den Deckel gebildet ist.
